# EUROPEAN PATENT SPECIFICATION

(11) **EP 4 652 654 B1**
(45) Date of publication and mention of the grant of the patent: **13.05.2026**
(21) Application number: 24700459.1
(22) Date of filing: 17.01.2024
(51) Int. Cl.: H02J 3/14, H02J 3/24, G06Q 50/06, G06Q 10/06, G06Q 30/0202

(54) **BALANCING SYSTEM AND METHOD FOR BALANCING AN ELECTRICITY MARKET ZONE AND A LOCAL GRID ISLAND DOWNSTREAM TO A TRANSFORMER STATION HAVING A TRANSFORMER CAPACITY**
AUSGLEICHSSYSTEM UND VERFAHREN ZUM AUSGLEICHEN EINER ELEKTRIZITÄTSMARKTZONE UND EINER LOKALEN NETZINSEL STROMABWÄRTS EINER TRANSFORMATORSTATION MIT TRANSFORMATORKAPAZITÄT
SYSTÈME ET PROCÉDÉ D'ÉQUILIBRAGE D'UNE ZONE DE MARCHÉ D'ÉLECTRICITÉ ET D'UN ÎLOT DE RÉSEAU LOCAL EN AVAL D'UNE STATION DE TRANSFORMATEUR À CAPACITÉ DE TRANSFORMATEUR

(30) Priority: 18.01.2023 EP 23152137
(43) Date of publication of application: 26.11.2025
(73) Proprietor: S.C. Nordic A/S, 7840 Højslev (DK)
(72) Inventor: BIRKELUND, Mogens, 7840 Højslev (DK)
(74) Representative: Patrade A/S
(86) International application number: PCT/EP2024/050948
(87) International publication number: WO 2024/153654

(56) References cited:
- CN-A- 115 173 429
- US-A1- 2013 245 847
- US-A1- 2020 373 758
- GARWA NIKHIL ET AL: ""Impact of EV on Integration with Grid System - A Review"", 2019 8TH INTERNATIONAL CONFERENCE ON POWER SYSTEMS (ICPS), IEEE, 20 December 2019 (2019-12-20), pages 1 - 6, XP033757205, DOI: 10.1109/ICPS48983.2019.9067587

## Description

### Field of the Invention

The present invention relates to a balancing system and method for balancing an electricity market zone and a local grid island downstream to a transformer station having a transformer capacity and operating at a transformer load, so that expansion of the transformer capacity can be delayed and/or proportions of the expansion can be reduced.

### Background of the Invention

The transition from fossil fuels to renewables will require a significant expansion of the electricity grid as renewables will mainly be producing electricity. It is estimated that the capacity of the electricity grid of Denmark must be at least doubled within a short time span. The introduction of battery-powered vehicles is already putting a strain on the electricity grid as the energy previously provided by fossil fuels must now be supplied by the electricity grid.

Furthermore, electricity production of renewables is not on-demand but will to a large extent depend on the weather. As a result, in Denmark, there will be a large electricity power increase and excess electricity power when there is a lot of wind and a large electricity power decrease and electricity power deficit when there is no wind or low wind speeds. This could be repeated for solar power as a function of solar energy. Thus, the balancing of the electricity market will only increase in complexity as the transition away from fossil fuels proceeds. The transition can however be delayed if the transition cannot happen ahead of the expansion of the electricity grid. In the near future, there will be an increased number of situations where a local grid island downstream to a transformer station will have reached the transformer capacity of the transformer station and thus no more electric power can be supplied to the local grid island without straining the transformer station and thereby significantly increasing wear of the transformer station.

Thus, there is a need for a balancing system and method, which can counteract the challenges posed by the transition to renewables by being able to balance an electricity market zone, while ensuring that the transformer station operates within the transformer capacity. US20130245847 describes generation of energy-related revenue for an energy customer of an electricity supplier. The disclosure is implemented by generating suggested operating schedules for energy assets that include a controllable energy asset, using an objective function. US2020373758 describes a system for controlling voltage supply to a portion of a distribution grid. The portion of the grid including a substation providing one or more transformers operable to increase or decrease the voltage supplied to consumers within the portion of the grid.

### Object of the Invention

It is an object of the invention to provide a balancing system and method for balancing an electricity market zone and a local grid island downstream to a transformer station having a transformer capacity and operating at a transformer load, so that expansion of the transformer capacity can be delayed and/or proportions of the expansion can be reduced.

### SUMMARY OF THE INVENTION

The invention is defined by a balancing system for balancing an electricity market zone and a local grid island downstream to a transformer station having a transformer capacity and operating at a transformer load, with the technical features of independent claim 1 and by a corresponding method with the steps of independent claim 8. Advantageous embodiments are described in the dependent claims.

Thereby, a balancing system is provided which can balance the frequency of the electricity market zone while ensuring that the transformer station does not operate at a transformer load being above the transformer capacity. Because the balancing system enables operation of the at least one electric power unit as a function of transformer capacity, the local grid island can have a greater overcapacity of electric power consumption than prior art solutions as the balancing system can decrease power consumption to keep the transformer load below the transformer capacity. This is especially relevant for the local grid island having a large number of power stations for charging electric vehicles is installed as this large number of power stations greatly increases the electric power consumption, at the same time as there is a transition towards heat pumps and/or electric boilers as replacement for gas heating or other kinds of fuel-driven heating. A significant expansion of the transformer capacity will be required, in order for the transformer to be able to supply electric power to all the electric units at peak periods. However, it can be calculated using statistics peak periods exceeding transformer load will, in many cases, be 100-500 hours a year. Thus, in most periods the transformer will be able to deliver power to The peak periods can be counteracted by reducing power consumption of the at least one electric power unit.

The peak periods rarely happen at total random time slots, and it is well known that there is peak in power consumption between 6 to 7 PM in Denmark due to food preparation. This peak is expected to increase due to the charging of electric cars in the same timeslot.

The electricity market zone may be DK1 or DK2 of Denmark, however it could also be any other electricity market zone having the need for a global balancing in the form of market frequency balancing and local balancing to ensure that the transformer capacity is not exceeded.

The at least one electric power unit can be any type of electric power unit as long as the maximum power consumption is greater than 0.1 MW. In theory one could use an electric power unit with a smaller maximum power consumption, though the market impact and balancing effect would however be non-effectful. The electric power unit can be a group of electric units such as a group of battery chargers for electric vehicles within the same local grid island or within the same parking lot. The electric power unit may preferably be an electric boiler as an electric boiler is less effected by quick changes to electric power consumption due to the high heat density of water. In addition, there are alternatives for heating water which can complement the electric power.

The means for monitoring a market frequency of the electricity market zone may be a frequency measurement unit or the means may be the communication module being further configured to receive the market frequency value continuously.

The controller may be part of a server being in communication with the at least one electric power unit and being configured for sending instructions to the at least one electric power unit as a function of the market frequency, the transformer capacity, and the transformer load.

In an embodiment, the controller may further be configured to define one or more virtual power units having a virtual power consumption up to an accumulated maximum power consumption being the sum of maximum power consumptions as a function of the at least one electric power unit, the market frequency, transformer capacity, and the transformer load, wherein the controller is configured to operate the one or more virtual power units as a function of the market frequency, the transformer capacity, and the transformer load.

The defining of one the one or more virtual power units provide the balancing system to provide several different balancing services depending on the balancing need. As an example, if the electricity market requests 1 MW for a symmetric market frequency stabilization and the electric power unit has a maximum power consumption of 3 MW, then the remaining 2 MW can be used for other market balancing services such as *"special regulation"* in DK1 where there is a relatively sudden need for increasing power consumption, which may be due to a larger wind power production. Then, the remaining electric power capacity of 2 MW may be used or partly used for the *"special regulation"* if this does not cause the transformer load to exceed the transformer capacity. Presently, in DK1, the owner of the electric power unit or virtual power unit will be paid to increase power consumption during the *"special regulation".* Various electric market zones have similar balancing solution similar to the DK1-*"special regulation".*

The one or more virtual power units may be operated in an asymmetric power frequency control service in an electricity market zone or a symmetric power frequency control service in an electricity market zone. In the case of operating as the asymmetric power frequency control service, the virtual power unit will in general operate at either 0 % or 100 % and increase or decrease power consumption as a function of the market frequency. In the case of operating as the symmetric power frequency control service, the virtual power unit will in general operate at 50 % and regulate as a function of the market frequency. The virtual power unit may be part of a single electric power unit, which has been divided into two or more virtual power units.

In an embodiment, the balancing system may be configured for being part of a symmetric power frequency control service, wherein the controller is configured to operate the at least one electric power unit at a pre-set electric operation power being equal to or less than half of the maximum power consumption. Thereby, the at least one electric power unit can increase or decrease power consumption symmetrically.

The at least one electric power unit may also be a virtual power unit operating at a pre-set electric operation power being equal to or less than half of the maximum power consumption of the virtual power unit.

In an embodiment, the maximum power consumption may be at least 2 MW or 5 MW or 10 MW or 15 MW or 20 MW or greater. The maximum power consumption is of a single electric power unit. In the cases where the maximum power consumption is at least 2 MW then the single electric power unit will be able to affect the transformer load significantly by increasing or decreasing the power consumption. Thus, the at least 2 MW electric power unit will in many cases be able to ensure that the transformer capacity is not exceeded by operating the at least 2 MW electric power unit at a significant lower power such as 25 % to 0 % of the maximum power consumption.

In an embodiment, the controller may be configured to have the transformer capacity take precedence over the market frequency.

The purpose of the balancing system is dual, the balancing system must ensure that the electricity market zone is balanced to ensure that the electricity market zone has a constant frequency of 50 Hz in Europe or 60 Hz in USA. It could also be that the market requires increased consumption through *"special regulation"* or similar solutions. At the same time, the increased and rapidly growing electrification means that the balancing system should also balance the local grid island downstream to a transformer station. By letting the transformer capacity take precedence over the market frequency so that the transformer load does not exceed the transformer capacity, the balancing of the local grid island thus is ensured, while the transformer is not damaged and/or the wear is not increased.

The electricity market zone comprises a plurality of local grid islands and all local grid islands will therefore not operate at the maximum transformer capacity of said local grid islands. Thus, one or more of the other local grid islands will be able to compensate for the lost power consumption of the balancing system on the local grid island, wherein the transformer load reaches the transformer capacity.

In an embodiment, the controller may be configured to cause the communication module to send a consumption request to one or more market balancing systems within the electricity market zone not forming part of the same local grid island, as a function of the transformer capacity taking precedence over the market frequency. Thereby, the balancing system is able to find the necessary consumption within the electricity market zone in a fast and efficient manner.

In an embodiment, the at least one electric power unit may include at least one dual power unit comprising an electric power unit and a fuel combustion unit, wherein the controller is configured to operate the at least one dual power unit as a function of the market frequency, transformer capacity, the transformer load, and required power output.

Some power units, such as boilers, can be heated using biomass or fuel or gas or electric energy and thus these boilers are excellent units for balancing an electric market zone and/or ensuring that the transformer operate below the transformer load. As an example, it may be necessary for the boiler to have certain power output equivalent to 2 MW electric power. In a symmetric electric market such as DK1 the electric power unit may operate at a baseline of 1 MW, which electric power consumption may rise and fall as a function of market frequency. The fuel combustion unit will function in reverse of the electric power unit i.e. when it is required to increase electric energy, as the fuel combustion unit will then decrease power production and vice versa. Such a boiler will operate in the dual mode when electric energy is more expensive than the biomass or fuel or gas, as well as the compensation for offering the electric power unit as a balancing system for the electric market zone.

However, the boiler may also operate at 2 MW electric energy and if the transformer is near or at the transformer load then the electric energy consumption is decreased, and the fuel combustion unit then compensates for reduced electric energy consumption so that the output from the boiler is substantially unaffected. Many if not all local grid islands will never have enough capacity if all units connected to the respective local grid island are active and consuming power, as this will statistically never happen.

The at least one dual power unit forming part of the balancing system enables further overselling of electric capacity in a local grid island which enables that the electrification can happen faster and more independently from the transformer capacity. Without the present balancing system, the electrification of various units must wait for an increase in the transformer capacity. In an embodiment, the at least one electric power unit may include a battery unit paired with an electric power unit, wherein the battery unit is configured for powering the electric power unit to reduce transformer load.

The battery unit can be charged at any time and may be charged during periods wherein the transformer load is below the transformer capacity. As previously mentioned, statistically, the transformer load may exceed the transformer capacity 100 to 500 hours each year. However, this will rarely be for periods longer than an hour. During the periods of high load, the battery unit may provide power directly to the electric power unit paired with the battery unit such that the transformer is not strained by consumption of the electric power unit and the transformer load is kept below the transformer capacity. As an example, the battery unit may provide 5-100 % of the electric power which can cause the transformer load to be kept below the transformer capacity. In effect, the electric power consumption of the local grid island downstream from a transformer can be greater than the transformer capacity for extended periods of time. This embodiment can function even if the balancing system is not used for balancing the market frequency. In some embodiments the balancing system may comprise a controller for the sole purpose of balancing the local grid island by ensuring that the transformer load does not exceed the transformer capacity.

The battery unit is preferably coupled with a boiler unit as a boiler unit can function for extended periods of time without electric power, or with less electric power than the nominal power, without an immediate negative effect, if the heated water can be used in application(s) with a slightly lower temperature than the nominal temperature of the boiler unit. In this case, the battery unit paired with the boiler unit can ensure that the boiler unit can function for extended periods with reduced electric power or no electric power from the transformer station.

An object may be achieved by a balancing system for balancing a local grid island downstream to a transformer station having a transformer capacity and operating at a transformer load, the balancing system comprises
- at least one electric power unit connected to the same transformer station, each electric power unit having a maximum power consumption greater than 0.1 MW, the at least one electric power unit includes a battery unit paired with one of the at least one electric power unit, wherein the battery unit is configured for powering the paired electric power unit to reduce transformer load;
- a communication module configured for at least receiving transformer load of a transformer station;
- a controller comprising at least one processor and at least one memory that includes program code, wherein the memory and the program code is configured to cause the processor to control power consumption of the paired electric power unit and sources of electric energy, and wherein the controller is configured to operate the paired electric power unit and battery unit as a function of the the transformer capacity and the transformer load.

The transformer load can be reduced by increasing power consumption from the battery unit. The battery unit can be charged during periods wherein the transformer load is below the transformer capacity. This energy stored in the battery can then be used during periods where the local grid island must be controlled to ensure a transformer load below the capacity. Thus, the controller also controls the sources of the electric energy. The sources of electric energy may be 20 % battery unit and 80 % transformer station or 80 % battery unit and 20 % transformer station or any other distribution. The electric power unit may have a consumption of 1 MW and thus a 20 % compensation by the battery unit will have a significant impact on the transformer load. Especially if the balance system comprises two or more electric power units paired with two or battery units.

The balancing of the local grid island is made even easier if the electric power unit is an electric boiler unit as heated water will in many embodiments function even if the temperature from the electric boiler unit has heated water below the optimal water temperature, as this will only be temporary. Thereby, an electric boiler with a paired battery unit can balance the local grid island for longer periods compared to other solutions.

In an embodiment, the at least one electric power unit may include an electric boiler. As described above the electric boiler is an electric unit, which has excellent characteristics for balancing. The electric boiler may be operating at an operation temperature of the water which is above the required temperature as water has a high heat density and thus may store a lot of heat energy. The electric boiler may have mixing battery downstream wherein water is mixed with the heated water so that the water has the correct operational temperature. Furthermore, the electric boiler may have one or more accumulation tanks where heated water can be stored for an extended period significant temperature loss. Thus, in some embodiments the electric boiler may be able to reduce electric power consumption without the need for compensation from the fuel combustion unit.

In an embodiment, the at least one dual power unit may include an electric boiler and the fuel combustion unit configured to heat the electric boiler. This embodiment is a particular excellent power unit for balancing the electricity market zone and/or the local grid island downstream to a transformer.

In some embodiments, the electric boilers may comprise one or more ohmic heating units and/or one or more electric cartridges.

In some embodiments, the dual power unit may further comprise one or accumulation tanks in fluid connection with the electric boiler, wherein the one or accumulation tanks comprises one or more ohmic heating units and/or one or more electric cartridges defining accumulation maximum power consumption, wherein the controller comprises a program code configured to cause the processor to control power consumption of the one or more ohmic heating units and/or one or more electric cartridges of the electric boiler.

In future embodiments, electric energy may be less expensive than gas or other fuel types. In this case the electric boiler will primarily be powered by electric energy to save costs. However, in this case the fuel combustion unit can be used to ensure the functioning of the local grid island and ensure that the transformer load does not exceed transformer capacity. During high loads on the transformer the fuel combustion unit can compensate for a lowering of the energy consumption of the electric boiler. It is not uncommon to have an electric boiler with a capacity above 1 MW and thus if the electric energy consumption is lowered by 50 % then this will have a significant effect on the transformer load. This embodiment can function even if the balancing system is not used for balancing the market frequency. In some embodiments the balancing system may comprise a controller for the sole purpose of balancing the local grid island by ensuring that the transformer load does not exceed the transformer capacity.

An object of the invention is achieved by a method for balancing an electricity market zone and a local grid island downstream to a transformer station having a transformer capacity operating at a transformer load. The method comprises steps of
- providing at least one electric power unit connected to the same transformer station, each electric power unit having a maximum power consumption greater than 0.1 MW;
- receiving transformer load and market frequency of the electricity market zone;
- operating the at least one electric power unit as a function of transformer load, transformer capacity, and market frequency.

Thereby, the method is able to balance the electricity market zone and the local grid island downstream to a transformer station by the step of operating the at least one electric power unit as a function of transformer load, transformer capacity, and market frequency.

In an embodiment, the method may include steps of
- defining one or more virtual power units having a virtual power consumption up to an accumulated maximum power consumption being the sum of maximum power consumptions as a function of the at least one electric power unit, the market frequency, transformer capacity, and the transformer load; and
- wherein the step of operating includes operating the one or more virtual power units.

The defining of one or more virtual power units enables that the at least one electric power unit can be used by two or more balancing services on the electricity market zone. This enables that the at least one electric power unit can be used more efficiently for balancing.

In an embodiment, the step of operating may be performed by operating the at least one electric power unit at a pre-set electric operation power being equal to or less than half of the maximum power consumption. This enables the method to be performed on an electricity market zone requiring symmetry.

According to the invention, the transformer capacity takes precedence over the market frequency. Thereby, the method can be performed without overloading the transformer. This will only happen on the few occasions where the market frequency requires an increase in power consumption and the transformer load is at or near the transformer capacity wherein an increase in power consumption would cause the transformer capacity to be exceeded.

The market frequency will still be required for balancing. Thus, the method may perform a step of broadcasting a request for increase power consumption to one or more other balancing systems forming part of other local grid islands.

In an embodiment, the step of providing may include providing at least one dual power unit comprising an electric power unit and a fuel combustion unit, the step of operation includes operating the at least one dual power unit as a function of the market frequency, transformer capacity, the transformer load, and required power output of the at least one dual power unit. The effect is the same as described above for the balancing system.

In an embodiment, the at least one electric power unit may include an electric boiler for the same reasons as described above for the balancing system.

In an embodiment, the at least one dual power unit may include an electric boiler and the fuel combustion unit configured to heat the electric boiler for the same reasons as described above for the balancing system.

Although not claimed, but kept in this description for illustrative purposes, an object of the invention is achieved by a computer program product comprising instructions to cause the balancing system according to anyone of claims 1-7 to execute the steps of the method according to anyone of claims 8 - 12.

Also not claimed, but kept in this description for illustrative purposes, an object of the invention is achieved by a computer-readable medium having stored the computer program thereon.

### Description of the Drawings

Embodiments of the invention will be described in the figures, whereon:
Fig. 1 illustrates an electricity market zone with local grid islands downstream to transformer stations;
Fig. 2 illustrates a balancing system comprising electric power units;
Fig. 3 illustrates a balancing system according to an embodiment of the invention comprising a virtual power unit;
Fig. 4 illustrates a balancing system according to an embodiment of the invention comprising dual power units;
Fig. 5 illustrates a method for balancing an electricity market zone and a local grid island downstream to a transformer station; and
Fig. 6 illustrates a balancing system according to an embodiment of the invention comprising a battery unit paired with an electric power unit.

### Detailed Description of the Invention

| **Item** | **No** |
|---|---|
| Electricity market zone | 10 |
| Local grid island | 20 |
| Transformer station | 30 |
| Balancing system | 100 |
| Electric power unit | 110 |
| Means | 120 |
| Communication module | 130 |
| Controller | 140 |
| Virtual power units | 150 |
| Dual power unit | 160 |
| Fuel combustion unit | 170 |
| Battery unit | 180 |
| Method | 1000 |
| Providing | 1100 |
| Defining | 1200 |
| Receiving | 1300 |
| Operating | 1400 |

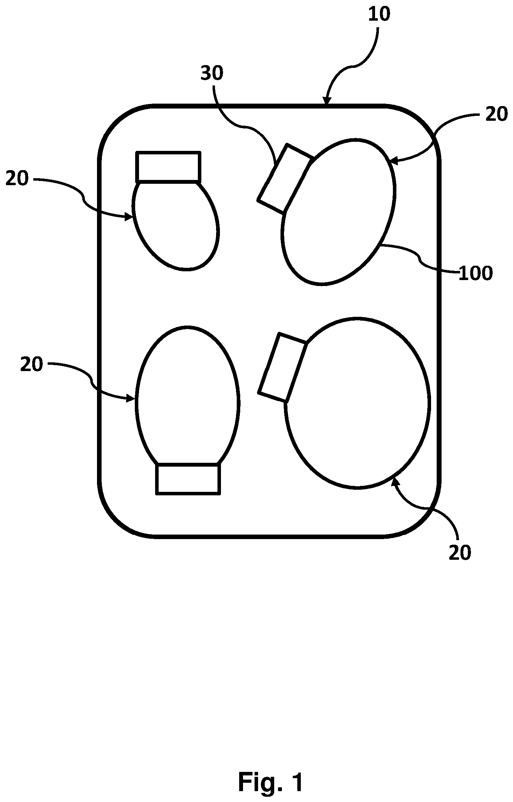

Figure 1 illustrates an electricity market zone 10 with local grid islands 20 downstream to transformer stations 30, where each transformer station 30 has a transformer capacity and operates at a transformer load.

The electricity market zone may comprise a plurality of local grid islands 20 downstream to transformer stations 30, wherein each local grid island 20 may be coupled to a balancing system 100 which can balance the frequency of the electricity market zone 10 while ensuring that the transformer station 30 does not operate at a transformer load above the transformer capacity. The balancing system 100 enables operation of the electric power units 110 comprised in the local grid island 20 as a function of transformer capacity.

The electricity market zone 10 may be DK1 or DK2 of Denmark, however it could also be any other electricity market zone 10 having the need for a global balancing in the form of market frequency balancing and local balancing to ensure that the transformer capacity is not exceeded.

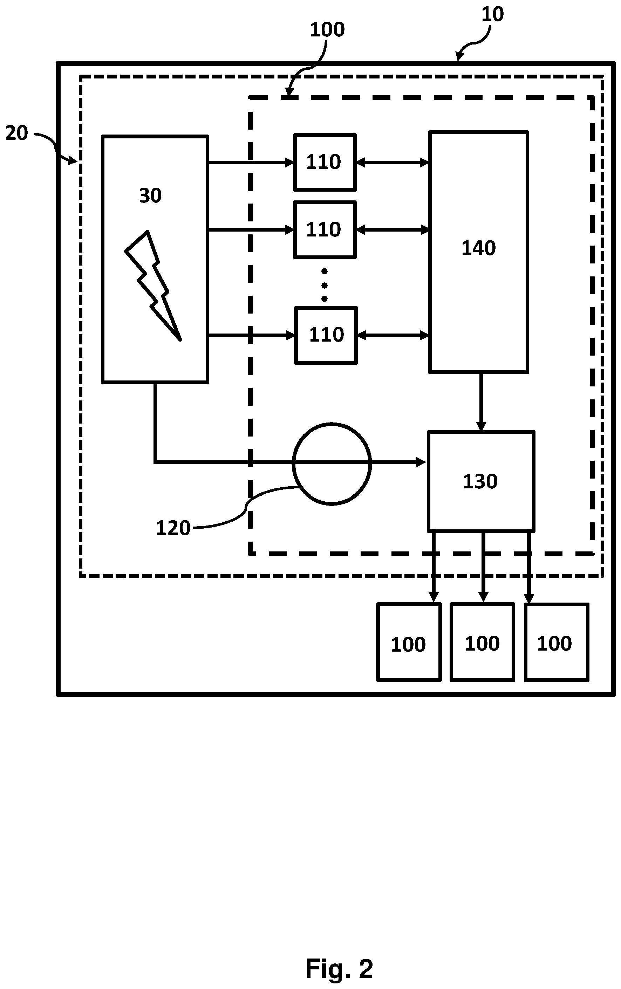

Referring now to figure 2 illustrating a balancing system 100 comprising electric power units 110. The balancing system 100 can balance the frequency of the local grid island 20 comprised in an electricity market zone 10 by operating the at least one electric power unit 110 comprised in the balancing system 100. For illustrative purposes, figure 2 illustrates a balancing system 100 comprising multiple electric power units 110.

The electric power units 110 are connected to the transformer station 30 and each electric power unit 110 has a maximum power consumption that is greater than 0.1 MW.

In some embodiments, the maximum power consumption may be at least 2 MW or 5 MW or 10 MW or 15 MW or 20 MW or greater. The maximum power consumption is of a single electric power unit 110.

The electric power unit 110 can be any type of electric power unit 110 and/or a group of electric power units 110 such as a group of battery chargers for electric vehicles within the same local grid island 20 or within the same parking lot. The electric power unit 110 may preferably be an electric boiler, as an electric boiler is less affected by quick changes to electric power consumption due to the high heat density of water, with there being alternatives for heating water which can complement the electric power.

The balancing system 100 further comprises a communication module 130 that is configured for receiving the transformer load of the transformer station 20 and means 120 for monitoring the market frequency of the electricity market zone 10, where the means 120 may be a frequency measurement unit or the communication module 130 further configured for receiving the market frequency value continuously.

A controller 140 comprised within the balancing system 100 comprising at least one processor and at least one memory that includes program code, wherein the memory and the program code is configured to cause the processor to control power consumption of the electric power units 110. The controller 140 is configured to operate the electric power units 110 as a function of the market frequency, the transformer capacity, and the transformer load.

The controller 140 may be part of server in communication with the electric power units 110 and configured for sending instructions to the electric power units 110 as a function of the market frequency, the transformer capacity, and the transformer load.

In some embodiments, the controller 140 may be configured to have the transformer capacity take precedence over the market frequency.

In some embodiments, the controller 140 may be configured to cause the communication module 130 to send a consumption request to one or more balancing systems 100 within the electricity market zone 10 not forming part of the same local grid island 20 as a function of the transformer capacity taking precedence over the market frequency. Thereby, the balancing system 100 is in itself able to find the necessary consumption within the electricity market zone 10 in a fast and efficient manner.

Because the electricity market zone 10 comprises a plurality of local grid islands 20 (figure 1) and all local grid islands 20will not operate at the maximum transformer capacity of said local grid islands 20, one or more of the other local grid islands 20 will be able to compensate for lost power consumption of a balancing system 100 on a local grid island 20, wherein the transformer load is at the transformer capacity.

In some embodiments, the balancing system 100 may be configured for being part of a symmetric power frequency control service, wherein the controller 110 is configured to operate the electric power units 110 at a pre-set electric operation power that is equal to or less than half of the maximum power consumption. Thereby, the electric power units 110 can increase or decrease power consumption symmetrically.

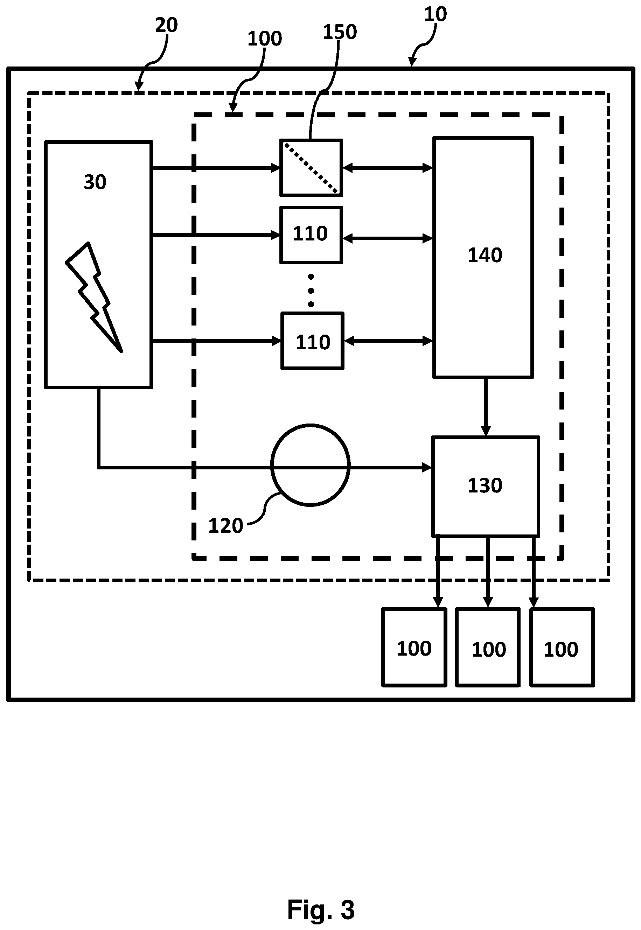

Figure 3 illustrates a balancing system 100 according to an embodiment of the invention comprising a virtual power unit 150. For illustrative purposes figure 3 illustrates a balancing system 100 comprising one virtual power unit 150 and multiple electric power units 110.

The balancing system 100 illustrated in figure 3 is identical to the balancing system 100 illustrated in figure 2 except from one electric power unit 110 being a virtual power unit 150.

In some embodiments, the controller 140 may further be configured to define one or more virtual power units 150 having a virtual power consumption up to an accumulated maximum power consumption being the sum of maximum power consumptions as a function of the at least one electric power unit 110, the market frequency, transformer capacity, and the transformer load and wherein the controller 140 is configured to operate the one or more virtual power units 150 as a function of the market frequency, the transformer capacity, and the transformer load.

The one or more virtual power units 150 may be operated in an asymmetric power frequency control service in an electricity market zone 10 or a symmetric power frequency control service in an electricity market zone 10. In the case of operating as the asymmetric power frequency control service, the virtual power unit 150 will in general operate at either 0 % or 100 % and increase or decrease power consumption as a function of the market frequency. In the case of operating as the symmetric power frequency control service, the virtual power unit will in general operate at 50 % and regulate as a function of the market frequency. The virtual power unit 150 may be part of a single electric power unit 110, which has been divided into two or more virtual power units 150.

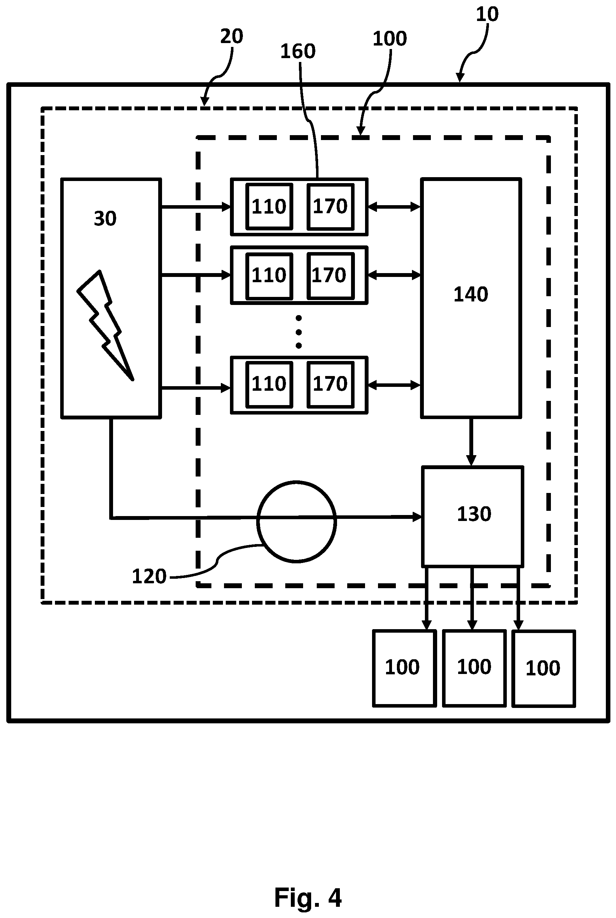

Figure 4 illustrates a balancing system 100 according to an embodiment of the invention comprising dual power units 160. For illustrative purposes figure 4 illustrates a balancing system 100 comprising multiple dual power units 160.

The balancing system 100 illustrated in figure 4 is identical to the balancing system 100 illustrated in figure 2 except from the electric power unit 110 that includes dual power units 160. In some embodiments, the at least one electric power unit 110 may include at least one dual power unit 160 comprising an electric power unit 110 and a fuel combustion unit 170, wherein the controller 140 is configured to operate the at least one dual power unit 160 as a function of the market frequency, transformer capacity, the transformer load, and required power output.

The at least one dual power unit 160 forming part of the balancing system 100 to enable further overselling of electric capacity in a local grid island 20 and thus enable that the electrification can happen faster and more independent of the transformer capacity. Without the present balancing system 100, the electrification of various units must wait for an increase in the transformer capacity.

In some embodiments, the at least one dual power unit 160 may include an electric boiler and the fuel combustion unit configured to heat the electric boiler. This embodiment is a particular excellent power unit for balancing the electricity market zone 10 and/or the local grid island 20 downstream to a transformer 30.

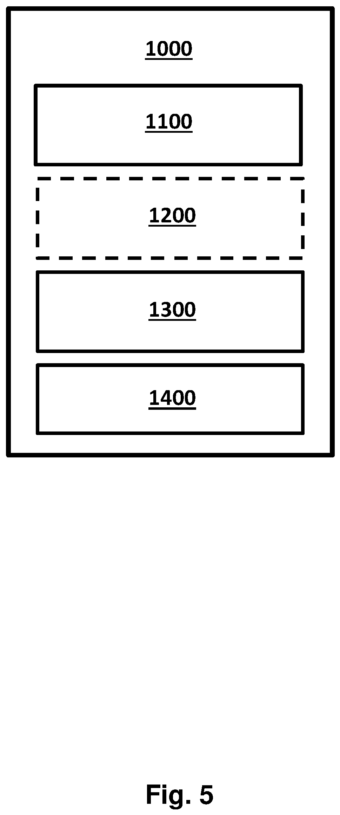

Figure 5 illustrates a method 1000 for balancing an electricity market zone 10 and a local grid island 20 downstream to a transformer station 30 having a transformer capacity operating at a transformer load.

The method 1000 comprises a step of providing 1100 at least one electric power unit 110, that is connected to the same transformer station, where each electric power units has a maximum power consumption greater than 0.1 MW.

In some embodiments, the maximum power consumption may be at least 2 MW or 5 MW or 10 MW or 15 MW or 20 MW or greater. The maximum power consumption is of a single electric power unit 110.

After providing 1100 at least one electric power unit 110, a step of receiving 1300 the transformer load and market frequency of the electricity market zone 10 is performed.

The step of receiving 1300 is followed by a step of operating 1400 the at least one electric power unit 110 as a function of transformer load, transformer capacity, and market frequency. In some embodiments, the method 1000 may further include a step of defining 1200 one or more virtual power units 150 having a virtual power consumption up to an accumulated maximum power consumption being the sum of maximum power consumptions as a function of the at least one electric power unit 110, the market frequency, transformer capacity, and the transformer load. The step of defining 1200 may be performed after the step of providing 1100, and the step of operating 1400 may include operating the one or more virtual power units 150.

In some embodiments, the step of operating 1400 may be performed by operating the at least one electric power unit 110 at a preset electric operation power that is equal to or less than half of the maximum power consumption. This enables the method 1000 to be performed on an electricity market zone 10 requiring symmetry.

In some embodiments, the step of operating 1400 may be performed by the transformer capacity taking precedence over the market frequency. Thereby, the method 1000 can be performed without overloading the transformer station 30.

In some embodiments, the step of providing 1400 may include providing at least one dual power unit 160 comprising an electric power unit 110 and a fuel combustion unit 170, and the step of operating 1400 includes operating the at least one dual power unit 160 as a function of the market frequency, transformer capacity, the transformer load and required power output of the at least one dual power unit 160.

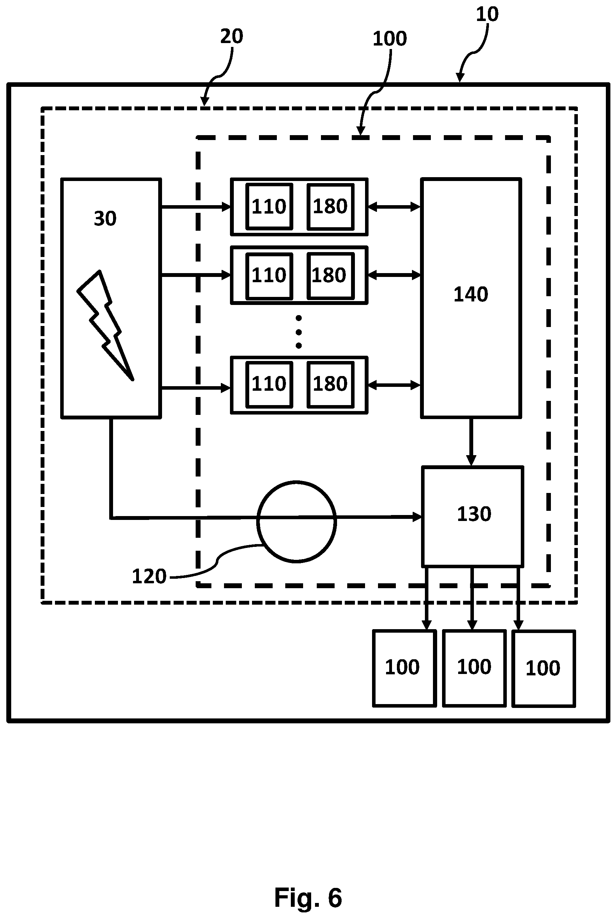

Fig. 6 illustrates a balancing system 100 according to an embodiment of the invention comprising a battery unit 180 paired with an electric power unit 110. For illustrative purposes figure 4 illustrates a balancing system 100 comprising multiple battery units 180. However, the balancing system may only have one battery unit 180 paired with an electric power unit 110.

The balancing system 100 illustrated in figure 6 is identical to the balancing system 100 illustrated in figure 2 except from the one or more electric power units 110 being paired with one or more battery units 180.

The at least one electric power unit 110 and battery unit 180 forming part of the balancing system 100 enable that the local grid island 20 can have an electric power consumption being above the transformer station's 30 transformer capacity without affecting the transformer station 30 and without affecting or with limited negative effect of the electric power unit 110 due to compensation from the battery unit 180.

In some embodiments, the at least one electric power unit 110 may be an electric boiler. This embodiment is a particular excellent power unit for balancing the electricity market zone 10 and/or the local grid island 20 downstream to a transformer 30.

## Claims

1. A balancing system (100) for balancing an electricity market zone (10) and a local grid island (20) downstream to a transformer station (30) having a transformer capacity and operating at a transformer load, the balancing system (100) comprises
- at least one electric power unit (110) connected to the same transformer station (30), each electric power unit (110) having a maximum power consumption greater than 0.1 MW;
- means (120) for monitoring a market frequency of the electricity market zone (10);
- a communication module (130) configured for at least receiving transformer load of a transformer station (30);
- a controller (140) comprising at least one processor and at least one memory that includes program code, wherein the memory and the program code is configured to cause the processor to control power consumption of the at least one electric power unit (110), wherein the controller (140) is configured to operate the at least one electric power unit (110) as a function of the market frequency, the transformer capacity, and the transformer load,
wherein the controller (140) is configured to have the transformer capacity take precedence over the market frequency and the controller is configured to cause the communication module (130) to send a consumption request to one or more market balancing systems (100) within the electricity market zone (10) not forming part of the same local grid island (20) as a function of the transformer capacity taking precedence over the market frequency.

2. A balancing system (100) according to claim 1, wherein the controller (140) is further configured to define one or more virtual power units (150) having a virtual power consumption up to an accumulated maximum power consumption being the sum of maximum power consumptions as a function of the at least one electric power unit (110), the market frequency, transformer capacity, and the transformer load, and wherein the controller (140) is configured to operate the one or more virtual power units (150) as a function of the market frequency, the transformer capacity, and the transformer load.

3. A balancing system (100) according to claim 1 or 2, wherein the balancing system (100) is configured for being part of a symmetric power frequency control service and wherein the controller (140) is configured to operate the at least one electric power unit (110) at a pre-set electric operation power being equal to or less than half of the maximum power consumption.

4. A balancing system (100) according to anyone of the preceding claims, wherein the maximum power consumption is at least 2 MW or 5 MW or 10 MW or 15 MW or 20 MW or greater.

5. A balancing system (100) according to anyone of claims 1-4, wherein the at least one electric power unit (110) include at least one dual power unit (160) comprising an electric power unit (110) and a fuel combustion unit (170), wherein the controller (140) is configured to operate the at least one dual power unit (160) as a function of the market frequency, transformer capacity, the transformer load, and required power output.

6. A balancing system (100) according to anyone of claims 1-5, wherein
- the at least one electric power unit (110) include an electric boiler; or
- the at least one dual power unit (160) include an electric boiler and the fuel combustion unit (170) configured to heat the electric boiler.

7. A balancing system (100) according to anyone of claims 1-6, wherein the at least one electric power unit (110) includes a battery unit (180) paired with one of the at least one electric power unit (110), wherein the battery unit (180) is configured for powering the paired electric power unit (110) to reduce transformer load.

8. A method (1000) for balancing an electricity market zone (10) and a local grid island (20) downstream to a transformer station (30) having a transformer capacity operating at a transformer load, the method (1000) comprising steps of
- providing (1100) at least one electric power unit (110) connected to the same transformer station (30), each electric power unit (110) having a maximum power consumption greater than 0.1 MW;
- receiving (1300) transformer load and market frequency of the electricity market zone (10);
- operating (1400) the at least one electric power unit (110) as a function of transformer load, transformer capacity, and market frequency, wherein the step of operating (1400) is performed by the transformer capacity take precedence over the market frequency by performing a step of sending a consumption request to one or more market balancing systems (100) within the electricity market zone (10) not forming part of the same local grid island (20) as a function of the transformer capacity taking precedence over the market frequency.

9. A method (1000) according to claim 8, wherein the method (1000) includes steps of
- defining (1200) one or more virtual power units (150) having a virtual power consumption up to an accumulated maximum power consumption being the sum of maximum power consumptions as a function of the at least one electric power unit (110), the market frequency, transformer capacity, and the transformer load; and
- wherein the step of operating (1400) includes operating (1400) the one or more virtual power units (150).

10. A method (1000) according to claim 8- 9, wherein the step of operating (1400) is performed by operating (1400) the at least one electric power unit (110) at a pre-set electric operation power being equal to or less than half of the maximum power consumption.

11. A method (1000) according to anyone of claims 8-10, wherein the step of providing (1100) includes providing (1100) at least one dual power unit (160) comprising an electric power unit (110) and a fuel combustion unit (170), and the step of operating (1400) includes operating (1400) the at least one dual power unit (160) as a function of the market frequency, transformer capacity, the transformer load, and required power output of the at least one dual power unit (160).

12. A method (1000) according to anyone of claims 8-11, wherein
- the at least one electric power unit (110) include an electric boiler; or
- the at least one dual power unit (160) include an electric boiler and the fuel combustion unit (170) configured to heat the electric boiler.

## Patentansprüche

1. Ausgleichssystem (100) zum Ausgleich einer Strommarktzone (10) und eines lokalen Netzinselbereichs (20) stromabwärts einer Transformatorstation (30), die eine Transformatorleistung aufweist und bei einer Transformatorlast betrieben wird, wobei das Ausgleichssystem (100) umfasst
- mindestens eine elektrische Leistungseinheit (110), die mit derselben Transformatorstation (30) verbunden ist, wobei jede elektrische Leistungseinheit (110) einen maximalen Leistungsverbrauch von mehr als 0,1 MW aufweist;
- Mittel (120) zur Überwachung einer Marktfrequenz der Strommarktzone (10);
- ein Kommunikationsmodul (130), das zumindest zum Empfangen der Transformatorlast einer Transformatorstation (30) ausgelegt ist;
- einen Controller (140), umfassend mindestens einen Prozessor und mindestens einen Speicher, der Programmcodes enthält, wobei der Speicher und der Programmcode so ausgelegt sind, dass sie den Prozessor veranlassen, den Leistungsverbrauch der mindestens einen elektrischen Leistungseinheit (110) zu steuern, wobei der Controller (140) dazu ausgelegt ist, die mindestens eine elektrische Leistungseinheit (110) in Abhängigkeit von der Marktfrequenz, der Transformatorleistung und der Transformatorlast zu betreiben,
wobei der Controller (140) so ausgelegt ist, dass die Transformatorleistung Vorrang vor der Marktfrequenz hat, und der Controller so ausgelegt ist, das Kommunikationsmodul (130) zu veranlassen, eine Verbrauchsanfrage an ein oder mehrere Marktausgleichssysteme (100) innerhalb der Strommarktzone (10) zu senden, die nicht Teil derselben lokalen Netzinsel (20) sind, in Abhängigkeit davon, dass die Transformatorleistung Vorrang vor der Marktfrequenz hat.

2. Ausgleichssystem (100) nach Anspruch 1, wobei der Controller (140) ferner dazu ausgelegt ist, eine oder mehrere virtuelle Leistungseinheiten (150) zu definieren, die einen virtuellen Leistungsverbrauch bis zu einem akkumulierten maximalen Leistungsverbrauch aufweisen, der die Summe der maximalen Leistungsverbräuche in Abhängigkeit von der mindestens einen elektrischen Leistungseinheit (110), der Marktfrequenz, der Transformatorleistung und der Transformatorlast ist, und wobei der Controller (140) dazu ausgelegt ist, die eine oder mehrere virtuelle Leistungseinheiten (150) in Abhängigkeit von der Marktfrequenz, der Transformatorleistung und der Transformatorlast zu betreiben.

3. Ausgleichssystem (100) nach Anspruch 1 oder 2, wobei das Ausgleichssystem (100) dazu ausgelegt ist, Teil eines symmetrischen Leistungs-Frequenzregelungsdienstes zu sein, und wobei der Controller (140) dazu ausgelegt ist, die mindestens eine elektrische Leistungseinheit (110) bei einer voreingestellten elektrischen Betriebsleistung zu betreiben, die gleich oder kleiner als die Hälfte des maximalen Leistungsverbrauchs ist.

4. Ausgleichssystem (100) nach einem der vorhergehenden Ansprüche, wobei der maximale Leistungsverbrauch mindestens 2 MW oder 5 MW oder 10 MW oder 15 MW oder 20 MW oder größer ist.

5. Ausgleichssystem (100) nach einem der Ansprüche 1-4, wobei die mindestens eine elektrische Leistungseinheit (110) mindestens eine Dual-Leistungseinheit (160) umfasst, die eine elektrische Leistungseinheit (110) und eine Brennstoffverbrennungseinheit (170) umfasst, wobei der Controller (140) dazu ausgelegt ist, die mindestens eine Dual-Leistungseinheit (160) in Abhängigkeit von der Marktfrequenz, der Transformatorleistung, der Transformatorlast und der erforderlichen Leistungsabgabe zu betreiben.

6. Ausgleichssystem (100) nach einem der Ansprüche 1-5, wobei
- die mindestens eine elektrische Leistungseinheit (110) einen Elektrokessel umfasst; oder
- die mindestens eine Dual-Leistungseinheit (160) einen Elektrokessel und die Brennstoffverbrennungseinheit (170) umfasst, die dazu ausgelegt ist, den Elektrokessel zu beheizen.

7. Ausgleichssystem (100) nach einem der Ansprüche 1-6, wobei die mindestens eine elektrische Leistungseinheit (110) eine Batterieeinheit (180) umfasst, die mit einer der mindestens einen elektrischen Leistungseinheit (110) gekoppelt ist, wobei die Batterieeinheit (180) dazu ausgelegt ist, die gekoppelte elektrische Leistungseinheit (110) mit Energie zu versorgen, um die Transformatorlast zu reduzieren.

8. Verfahren (1000) zum Ausgleich einer Strommarktzone (10) und eines lokalen Netzinselbereichs (20) stromabwärts einer Transformatorstation (30), die eine Transformatorleistung aufweist und bei einer Transformatorlast betrieben wird, wobei das Verfahren (1000) die Schritte umfasst
- Bereitstellen (1100) mindestens einer elektrischen Leistungseinheit (110), die mit derselben Transformatorstation (30) verbunden ist, wobei jede elektrische Leistungseinheit (110) einen maximalen Leistungsverbrauch von mehr als 0,1 MW aufweist;
- Empfangen (1300) der Transformatorlast und der Marktfrequenz der Strommarktzone (10);
- Betreiben (1400) der mindestens einen elektrischen Leistungseinheit (110) in Abhängigkeit von Transformatorlast, Transformatorleistung und Marktfrequenz, wobei der Schritt des Betreibens (1400) dadurch durchgeführt wird, dass die Transformatorleistung Vorrang vor der Marktfrequenz hat, durch Ausführen eines Schritts des Sendens einer Verbrauchsanfrage an ein oder mehrere Marktausgleichssysteme (100) innerhalb der Strommarktzone (10), die nicht Teil derselben lokalen Netzinsel (20) sind, in Abhängigkeit davon, dass die Transformatorleistung Vorrang vor der Marktfrequenz hat.

9. Verfahren (1000) nach Anspruch 8, wobei das Verfahren (1000) Schritte umfasst
- Definieren (1200) einer oder mehrerer virtueller Leistungseinheiten (150), die einen virtuellen Leistungsverbrauch bis zu einem akkumulierten maximalen Leistungsverbrauch aufweisen, der die Summe der maximalen Leistungsverbräuche in Abhängigkeit von der mindestens einen elektrischen Leistungseinheit (110), der Marktfrequenz, der Transformatorleistung und der Transformatorlast ist; und
- wobei der Schritt des Betreibens (1400) das Betreiben (1400) der einen oder mehreren virtuellen Leistungseinheiten (150) umfasst.

10. Verfahren (1000) nach Anspruch 8-9, wobei der Schritt des Betreibens (1400) durch Betreiben (1400) der mindestens einen elektrischen Leistungseinheit (110) bei einer voreingestellten elektrischen Betriebsleistung durchgeführt wird, die gleich oder kleiner als die Hälfte des maximalen Leistungsverbrauchs ist.

11. Verfahren (1000) nach einem der Ansprüche 8-10, wobei der Schritt des Bereitstellens (1100) das Bereitstellen (1100) mindestens einer Dual-Leistungseinheit (160) umfasst, die eine elektrische Leistungseinheit (110) und eine Brennstoffverbrennungseinheit (170) umfasst, und der Schritt des Betreibens (1400) das Betreiben (1400) der mindestens einen Dual-Leistungseinheit (160) in Abhängigkeit von der Marktfrequenz, der Transformatorleistung, der Transformatorlast und der erforderlichen Leistungsabgabe der mindestens einen Dual-Leistungseinheit (160) umfasst.

12. Verfahren (1000) nach einem der Ansprüche 8-11, wobei
- die mindestens eine elektrische Leistungseinheit (110) einen Elektrokessel umfasst; oder
- die mindestens eine Dual-Leistungseinheit (160) einen Elektrokessel und die Brennstoffverbrennungseinheit (170) umfasst, die dazu ausgelegt ist, den Elektrokessel zu beheizen.

## Revendications

1. Système d'équilibrage (100) destiné à équilibrer une zone de marché d'électricité (10) et un îlot de réseau local (20) en aval d'une station de transformateur (30) présentant une capacité de transformateur et fonctionnant à une charge de transformateur, le système d'équilibrage (100) comprend
- au moins une unité de puissance électrique (110) connectée à la même station de transformateur (30), chaque unité de puissance électrique (110) présentant une consommation d'énergie maximale supérieure à 0,1 MW ;
- un moyen (120) de surveillance d'une fréquence de marché de la zone de marché d'électricité (10) ;
- un module de communication (130) configuré pour recevoir au moins la charge de transformateur d'une station de transformateur (30) ;
- un dispositif de commande (140) comprenant au moins un processeur et au moins une mémoire comportant un code de programme, dans lequel la mémoire et le code de programme sont configurés pour amener le processeur à commander la consommation d'énergie de l'au moins une unité de puissance électrique (110), dans lequel le dispositif de commande (140) est configuré pour faire fonctionner l'au moins une unité de puissance électrique (110) en fonction de la fréquence de marché, de la capacité de transformateur et de la charge de transformateur,
dans lequel le dispositif de commande (140) est configuré pour que la capacité de transformateur ait priorité sur la fréquence de marché et le dispositif de commande est configuré pour amener le module de communication (130) à envoyer une demande de consommation à un ou plusieurs systèmes d'équilibrage de marché (100) dans la zone de marché d'électricité (10) ne faisant pas partie du même îlot de réseau local (20) en fonction de la capacité de transformateur qui a priorité sur la fréquence de marché.

2. Système d'équilibrage (100) selon la revendication 1, dans lequel le dispositif de commande (140) est en outre configuré pour définir une ou plusieurs unités de puissance virtuelles (150) présentant une consommation de puissance virtuelle allant jusqu'à une consommation de puissance maximale cumulée qui est la somme des consommations de puissance maximales en fonction de l'au moins une unité de puissance électrique (110), de la fréquence de marché, de la capacité de transformateur et de la charge de transformateur, et dans lequel le dispositif de commande (140) est configuré pour faire fonctionner les une ou plusieurs unités de puissance virtuelles (150) en fonction de la fréquence de marché, de la capacité de transformateur et de la charge de transformateur.

3. Système d'équilibrage (100) selon la revendication 1 ou 2, dans lequel le système d'équilibrage (100) est configuré pour faire partie d'un service de commande de fréquence de puissance symétrique et dans lequel le dispositif de commande (140) est configuré pour faire fonctionner l'au moins une unité de puissance électrique (110) à une puissance de fonctionnement électrique prédéfinie qui est égale ou inférieure à la moitié de la consommation d'énergie maximale.

4. Système d'équilibrage (100) selon l'une quelconque des revendications précédentes, dans lequel la consommation d'énergie maximale est d'au moins 2 MW ou 5 MW ou 10 MW ou 15 MW ou 20 MW ou plus.

5. Système d'équilibrage (100) selon l'une quelconque des revendications 1 à 4, dans lequel l'au moins une unité de puissance électrique (110) comporte au moins une unité de puissance double (160) comprenant une unité de puissance électrique (110) et une unité de combustion de combustible (170), dans lequel le dispositif de commande (140) est configuré pour faire fonctionner l'au moins une unité de puissance double (160) en fonction de la fréquence de marché, de la capacité de transformateur, de la charge de transformateur et de la puissance de sortie requise.

6. Système d'équilibrage (100) selon l'une quelconque des revendications 1 à 5, dans lequel
- l'au moins une unité de puissance électrique (110) comporte une chaudière électrique ; ou
- l'au moins une unité de puissance double (160) comporte une chaudière électrique et l'unité de combustion de combustible (170) configurée pour chauffer la chaudière électrique.

7. Système d'équilibrage (100) selon l'une quelconque des revendications 1 à 6, dans lequel l'au moins une unité de puissance électrique (110) comporte une unité de batterie (180) associée à l'une de l'au moins une unité de puissance électrique (110), dans lequel l'unité de batterie (180) est configurée pour alimenter l'unité de puissance électrique (110) associée afin de réduire la charge de transformateur.

8. Procédé (1000) d'équilibrage d'une zone de marché d'électricité (10) et d'un îlot de réseau local (20) en aval d'une station de transformateur (30) présentant une capacité de transformateur fonctionnant à une charge de transformateur, le procédé (1000) comprenant les étapes de
- fourniture (1100) d'au moins une unité de puissance électrique (110) connectée à la même station de transformateur (30), chaque unité de puissance électrique (110) présentant une consommation d'énergie maximale supérieure à 0,1 MW ;
- réception (1300) de la charge de transformateur et de la fréquence de marché de la zone de marché d'électricité (10) ;
- fonctionnement (1400) de l'au moins une unité de puissance électrique (110) en fonction de la charge de transformateur, de la capacité de transformateur et de la fréquence de marché, dans lequel l'étape de fonctionnement (1400) est effectuée en faisant en sorte que la capacité de transformateur ait priorité sur la fréquence de marché en effectuant une étape d'envoi d'une demande de consommation à un ou plusieurs systèmes d'équilibrage de marché (100) dans la zone de marché d'électricité (10) ne faisant pas partie du même îlot de réseau local (20) en fonction de la capacité de transformateur qui a priorité sur la fréquence de marché.

9. Procédé (1000) selon la revendication 8, dans lequel le procédé (1000) comporte les étapes de
- définition (1200) d'une ou de plusieurs unités de puissance virtuelles (150) présentant une consommation d'énergie virtuelle allant jusqu'à une consommation d'énergie maximale cumulée qui est la somme des consommations d'énergie maximales en fonction de l'au moins une unité de puissance électrique (110), de la fréquence de marché, de la capacité de transformateur et de la charge de transformateur ; et
- dans lequel l'étape de fonctionnement (1400) comporte le fonctionnement (1400) des une ou plusieurs unités de puissance virtuelles (150).

10. Procédé (1000) selon la revendication 8 et 9, dans lequel l'étape de fonctionnement (1400) est réalisée en faisant fonctionner (1400) l'au moins une unité de puissance électrique (110) à une puissance de fonctionnement électrique prédéfinie qui est égale ou inférieure à la moitié de la consommation d'énergie maximale.

11. Procédé (1000) selon l'une quelconque des revendications 8 à 10, dans lequel l'étape de fourniture (1100) comporte la fourniture (1100) d'au moins une unité de puissance double (160) comprenant une unité de puissance électrique (110) et une unité de combustion de combustible (170), et l'étape de fonctionnement (1400) comporte le fonctionnement (1400) de l'au moins une unité de puissance double (160) en fonction de la fréquence de marché, de la capacité de transformateur, de la charge de transformateur et de la puissance de sortie requise de l'au moins une unité de puissance double (160).

12. Procédé (1000) selon l'une quelconque des revendications 8 à 11, dans lequel
- l'au moins une unité de puissance électrique (110) comporte une chaudière électrique ; ou
- l'au moins une unité de puissance double (160) comporte une chaudière électrique et l'unité de combustion de combustible (170) configurée pour chauffer la chaudière électrique.
